# DEMANDE DE BREVET EUROPEEN

(11) **EP 1 513 246 A1**
(43) Date de publication de la demande: **09.03.2005**
(21) Numéro de dépôt: 03447223.3
(22) Date de dépôt: 05.09.2003
(51) Int. Cl.: H02K 23/62, H02K 5/128

(54) **Moteur pas à pas auto commuté avec manchon d'entrefer et collecteur entrainé magnétiquement**

(71) Demandeur: Techspace Aero S.A., 4041 Milmort (BE)
(72) Inventeur: Promper, Christophe, 4802 Heusy (BE); Borbouse, Cédric, 4121 Neuville-en-Condroz (BE); Bomal, Jean-Christian, 4340 Villers-l'Eveque (BE)
(74) Mandataire: Van Malderen, Michel

(57) **Abrégé**

La présente invention se rapporte à un moteur pas à pas à courant continu comprenant un stator (1) multipolaire à n bobinages (n pair) formant n/2 paires de pôles magnétiques et un rotor (2) à m dents ou pôles (m ≠ n) et des moyens d'alimentation desdits bobinages (7) du stator dans un ordre successif pour faire tourner le rotor dans un sens déterminé, caractérisé en ce que lesdits moyens comprennent un dispositif électromécanique de type balais-collecteur (4,15) où le collecteur (15) est solidaire du rotor et présente une configuration de pistes conductrices (5) coopérant avec les balais (4) pendant le fonctionnement de manière à assurer automatiquement, de par la simple rotation du moteur, l'alimentation desdits bobinages (7) du stator.

## Description

### Objet de l'invention

La présente invention se rapporte à un moteur à courant continu pas à pas alimenté par un système électromécanique balais-collecteur.

Le domaine d'application de la présente invention est celui des actionneurs pour vanne fonctionnant dans des environnements agressifs, par exemple les vannes spatiales cryogéniques.

### Etat de la technique et approche problème-solution

Les moteurs à courant continu alimentés par un système balais-collecteur sont universellement connus et utilisés dans l'industrie et la vie courante.

La partie fixe ou stator d'un tel moteur est constituée d'aimants permanents, par exemple en terres rares ou de bobines dans lesquelles passe le courant continu, tandis que la partie tournante ou rotor est constituée de bobines également parcourues par le courant continu.

L'interaction du champ magnétique créé par le stator avec le courant circulant dans le rotor donne naissance à la force électromagnétique qui fait tourner le rotor. Plus exactement, comme une bobine comprend au moins deux conducteurs parcourus par des courants opposés, on obtient un couple rotorique.

Dans un tel moteur, le contact par balais et collecteur (contact glissant charbon - cuivre) constitue l'interface mécanique permettant d'alimenter successivement les bobines rotoriques avec la bonne polarité, de façon à ce que le moteur tourne avec un couple constant, proportionnel au courant. Le collecteur est situé sur le rotor et dirige le courant vers les enroulements du rotor pendant la rotation de celui-ci.

D'autre part, il existe des moteurs pas à pas sans balais ou "brushless" qui convertissent directement une impulsion électrique en un positionnement angulaire de caractère incrémental (d'où le terme "pas"). Ainsi, chaque impulsion envoyée par le système de commande au module de puissance provoque la rotation d'un pas du moteur. Un moteur à courant continu pas à pas peut être utilisé lorsque le réglage de position angulaire de l'axe du moteur doit se faire de façon précise. Ces moteurs sont nécessairement équipés d'une électronique de contrôle et d'un capteur de position.

On distingue, au sein de cette catégorie de moteurs, les moteurs à réluctance variable, les moteurs à aimants permanents et les moteurs hybrides.

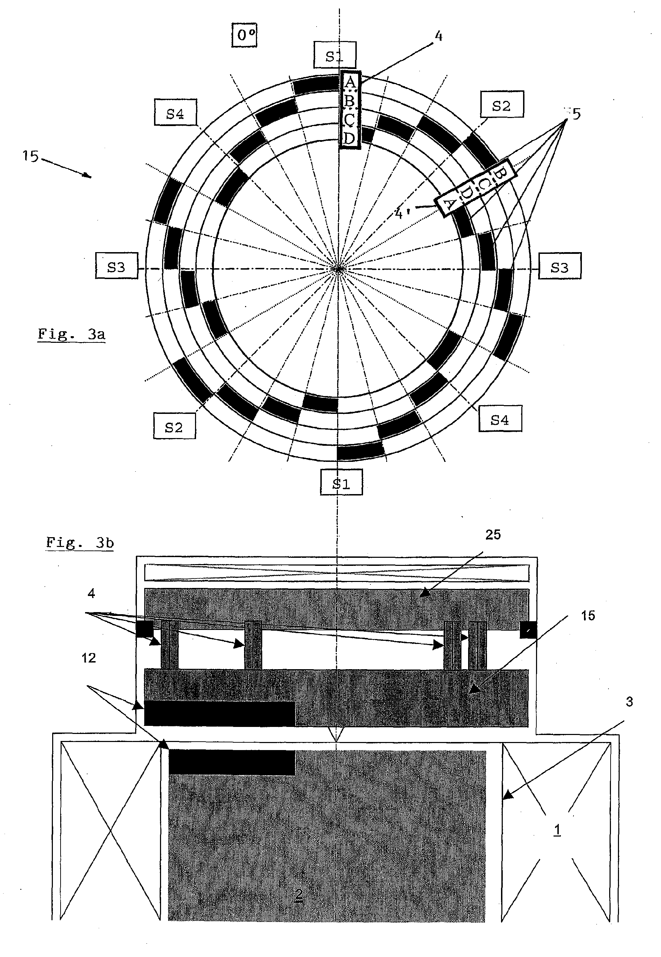

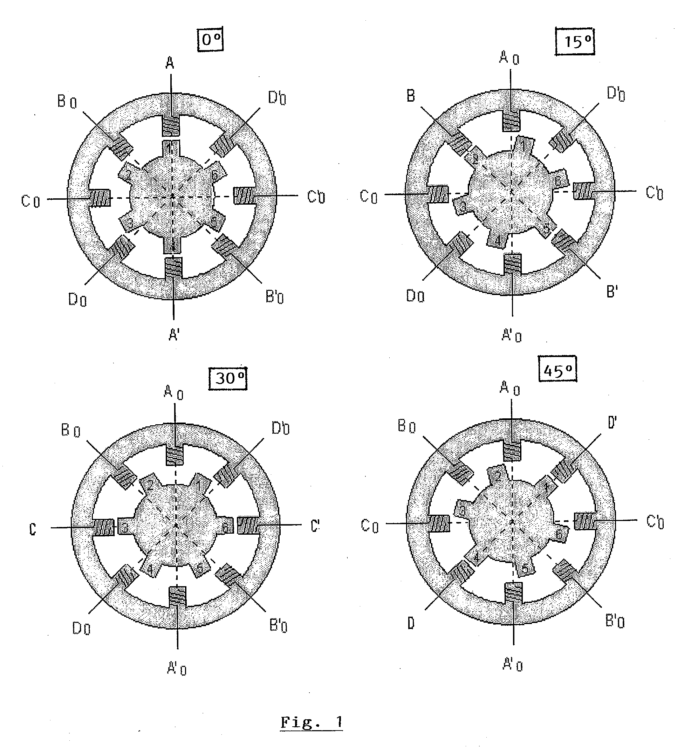

Les moteurs à réluctance variable comportent une denture dont le pas est différent au rotor et au stator, le principe consistant à maximiser le flux par emprunt du chemin de moindre réluctance. Le rotor n'est pas un aimant permanent (fer doux). Le schéma de fonctionnement d'un moteur pas à pas à réluctance variable est illustré à la figure 1 dans le cas d'un moteur à 4 paires de pôles. La rotation du moteur et en particulier la position angulaire finale souhaitée de l'axe du rotor, est obtenue par l'alimentation successive, au moyen d'un circuit électronique, des paires de bobinages (A,A'),(B,B'),(C,C') et (D,D').

Les moteurs à aimants permanents se basent sur le principe d'attraction des pôles opposés et de répulsion des pôles identiques. Le stator comporte plusieurs paires de pôles entourés chacun par une bobine parcourue par un courant, ce qui produit le champ magnétique. Le rotor est constitué d'aimants permanents. Il convient alors de commuter les courants de bobinage dans un ordre précis pour assurer l'excitation par pas entier, voire par demi-pas. Dans le cas d'un moteur à aimants permanents, il existe un couple même lorsque le stator n'est pas alimenté, lié au champ magnétique résiduel. Ce couple maintient le moteur dans sa position lorsque l'alimentation est coupée et est appelé "couple de détente".

Enfin, le moteur hybride combine les technologies du moteur à réluctance variable et du moteur à aimants permanents. Il permet d'obtenir un couple plus important que le moteur à réluctance variable.

Dans certaines applications spatiales nécessitant un déplacement rotatif précis d'un arbre, telles que les vannes pour fluide cryogénique, les moteurs pas à pas présentent d'une part un inconvénient de coût lié à l'électronique de contrôle et au capteur de position et d'autre part un inconvénient de surpoids lié à l'alimentation de l'électronique de contrôle.

Afin d'éliminer ces inconvénients, l'homme de métier pourrait être tenté de recourir à un moteur pas à pas à courant continu pourvu d'un système de commutation électromécanique, de préférence automatique, comprenant des balais et un collecteur, permettant d'alimenter successivement les bobines statoriques du moteur pas à pas. Dans ce cas, pour éviter que le système balais-collecteur ne baigne dans le fluide agressif (par exemple oxygène liquide), il est nécessaire de séparer ce système du rotor du moteur, lui-même immergé dans le fluide.

### Buts de l'invention

La présente invention a pour but de s'affranchir des inconvénients de l'état de la technique.

En particulier, l'invention vise à réaliser un moteur pas à pas à commutation automatique, en évitant une coûteuse et lourde alimentation électronique de régulation.

La présente invention vise encore à utiliser pour la commutation d'un moteur pas à pas un système balais-collecteur dont le collecteur est conçu de manière à ce que la commutation du moteur, c'est-à-dire le passage du courant d'une bobine à une autre, se fasse automatiquement.

En outre, l'invention a pour but le découplage mécanique du rotor du moteur pas à pas et du système balais-collecteur, ce qui permet d'éviter que les conditions d'environnement éventuellement agressives vues par le moteur soient aussi vues par le système balais-collecteur.

L'invention a encore pour but de fournir une solution davantage fiabilisée en ce sens que l'électronique de régulation est remplacée par des moyens purement mécaniques.

### Principaux éléments caractéristiques de l'invention

Un premier aspect de la présente invention concerne un moteur pas à pas à courant continu comprenant un stator multipolaire à n (n pair) bobinages formant n/2 paires de pôles magnétiques et un rotor à m dents ou pôles (m ≠ n) et des moyens d'alimentation desdits bobinages du stator dans un ordre successif pour faire tourner le rotor dans un sens déterminé, caractérisé en ce que lesdits moyens comprennent un dispositif électromécanique de type balais-collecteur où le collecteur est solidaire du rotor et présente une configuration de pistes conductrices coopérant avec les balais pendant le fonctionnement de manière à assurer automatiquement, de par la simple rotation du moteur, l'alimentation desdits bobinages du stator.

Selon l'invention, le rotor est isolé physiquement du stator par un chemisage, de préférence en matériau métallique amagnétique.

De préférence, le collecteur est couplé magnétiquement au rotor, la rotation conjointe des deux éléments étant réalisée sans lien mécanique.

Toujours selon l'invention, le collecteur comporte n/2 pistes circulaires adjacentes pourvues de secteurs conducteurs intermittents disposés sur chaque piste à intervalle régulier. Les secteurs conducteurs de deux pistes adjacentes quelconques sont disposés de manière à permettre l'alimentation successive des bobinages et par suite le déplacement angulaire incrémental du rotor, appelé pas.

Avantageusement, les secteurs conducteurs de deux pistes adjacentes quelconques peuvent se recouvrir partiellement dans le sens circonférentiel, ce qui correspond au fait que le bobinage d'indice i (i entier) est toujours alimenté lorsque la commutation de l'alimentation est réalisée sur le bobinage d'indice i+1, ce qui permet l'obtention de pas intermédiaires.

Selon une première modalité d'exécution préférée de l'invention, lesdites pistes comprenant des secteurs conducteurs intermittents sont disposées sur l'une des faces d'un disque centré sur l'axe du rotor.

Selon une deuxième modalité d'exécution préférée de l'invention, lesdites pistes comprenant des secteurs conducteurs intermittents sont disposées chacune sur la tranche d'un disque centré sur le rotor, les différents disques étant empilés de manière contiguë.

De préférence, le disque comporte sur une de ses faces ou sur sa tranche un circuit imprimé présentant les secteurs conducteurs intermittents.

L'invention a été conçue pour l'alimentation d'un moteur pas à pas, que ce soit un moteur à réluctance variable, le rotor étant un rotor à encoches en matériau non aimanté ferromagnétique, de préférence en fer doux, ou un moteur à aimants permanents, le rotor comprenant une pluralité d'aimants permanents, ou encore un moteur hybride.

Une caractéristique remarquable de l'invention est que le contact électrique intermittent au niveau du collecteur permettant la commutation d'un bobinage du stator est assuré au moyen de deux balais fixes adjacents, dont l'un est connecté à la borne positive (+ V) de l'alimentation et l'autre connecté à une extrémité du bobinage à commuter, l'autre extrémité de ce bobinage étant connectée à la borne 0 de l'alimentation.

Selon l'invention, le moteur pas à pas peut également comprendre un second dispositif de balais sur lequel l'alimentation des bobines statoriques peut être commutée et dont la configuration des pistes a été adaptée au sens de rotation inverse du moteur.

De préférence, le moteur comprend alors un interrupteur pour la commutation du premier au second dispositif de balais.

Un autre aspect de la présente invention concerne un collecteur appartenant à un dispositif électromécanique balais-collecteur pour moteur pas à pas à courant continu tel que décrit ci-dessus.

Encore un autre aspect de l'invention se rapporte à une vanne, de préférence pour le contrôle de l'écoulement de fluides agressifs tels des fluides portés à très haute ou très basse température, comprenant un dispositif d'actionnement à arbre commandé par un moteur pas à pas selon les indications données ci-dessus, caractérisée en ce qu'uniquement l'arbre et le rotor du moteur baignent dans ledit fluide. Une telle vanne sera utilisée de préférence pour le contrôle de l'écoulement de fluide cryogénique dans le secteur spatial.

### Brève description des figures

La figure 1, telle que déjà mentionnée ci-dessus, illustre le fonctionnement d'un moteur à réluctance variable (Source : M. BONIN, CERESP Dijon, 1999).

La figure 2 représente un moteur pas à pas selon l'invention avec vue d'ensemble de son chemisage.

La figure 3.a représente schématiquement une vue en plan du collecteur selon l'invention, pour une forme d'exécution quadripolaire (8 enroulements).

La figure 3.b représente schématiquement une vue en coupe du collecteur de la figure 3.a couplé magnétiquement au moteur pas à pas à courant continu.

La figure 4 représente schématiquement le principe de connexion du dispositif balais-collecteur de l'invention.

### Description d'une forme d'exécution préférée de l'invention

Le dispositif automatique de commutation pour moteur pas à pas, proposé par la présente invention, s'inspire du principe du système balais-collecteur utilisé dans les moteurs à courant continu.

La première solution venant à l'esprit consiste à prolonger l'arbre du moteur et à monter le système balais-collecteur sur celui-ci. Cette solution permettrait d'obtenir un collecteur se déplaçant directement et automatiquement avec l'arbre du moteur.

L'inconvénient de cette solution est l'utilisation obligatoire de joints dynamiques pour empêcher le fluide d'être en contact avec le système balais-collecteur. La présence de ces joints dynamiques nécessiterait une augmentation du couple moteur nominal et par conséquent des dimensions et une masse accrues du moteur.

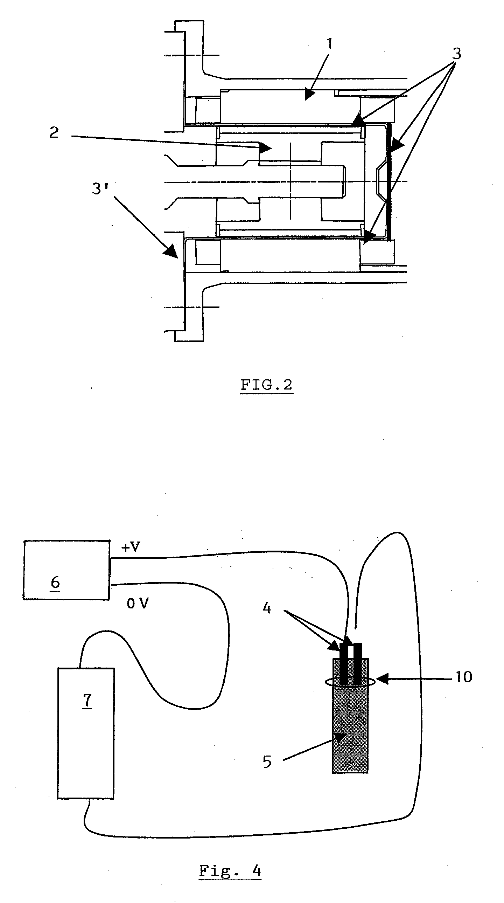

La solution proposée par la présente invention, schématisée sur les figures 2 et 3b, concerne un moteur "brushless" à courant continu comprenant d'une part un stator 1 muni d'un certain nombre de bobinages qui forment les différents pôles statoriques et d'autre part un rotor 2 muni d'un certain nombre d'aimants permanents ou un rotor à encoches en fer doux. Le moteur présente un chemisage de protection 3,3' de préférence réalisé dans un matériau métallique amagnétique et situé dans l'entrefer, de sorte qu'uniquement le rotor et l'arbre accouplé à celui-ci peuvent entrer en contact avec le fluide potentiellement agressif. Il importe alors de trouver un couplage non mécanique entre le rotor et le collecteur qui alimente les balais solidaires du stator. Le couplage retenu dans le cadre de l'invention est magnétique.

Ainsi, lorsqu'il tourne, le rotor 2 entraîne le collecteur 15 grâce à la force d'attraction s'exerçant entre deux aimants permanents 12, fixés respectivement sur le rotor et une des faces, la face non active, du disque collecteur (Fig. 3.b). La face active du collecteur représentée sur la figure 3.a comprend un certain nombre de pistes conductrices de courant 5, qui sont en contact avec les balais 4. Ces balais sont maintenus en contact avec le collecteur 15 par une pièce fixe 25.

Selon cette forme d'exécution de l'invention, chaque bobine 7 du stator 1 est connectée à l'alimentation électrique 6 via deux balais 4, situés côte à côte. Lorsqu'un double balai 4 se trouve sur l'une des pistes 5 du collecteur, un contact électrique 10 est réalisé et le courant s'établit dans la bobine 7 reliée électriquement. En effet, l'un des deux balais 4 est connecté à l'alimentation électrique continue 6 (borne +V) tandis que l'autre est connecté à un enroulement 7 du moteur. L'autre extrémité de cet enroulement 7 est connecté à la borne 0 V de l'alimentation 6 (Figure 4).

De la sorte, lorsque le rotor tourne, il entraîne magnétiquement le collecteur qui, en changeant de position, fait passer automatiquement, de par la rotation, le courant dans des bobines statoriques successives, dans un ordre prédéfini afin que la séquence de rotation voulue soit respectée.

A l'instant où il est requis de connecter un autre enroulement à l'alimentation pour poursuivre la rotation, un autre couple de balais prend le relais par contact avec la piste adjacente. La chronologie de commutation est assurée précisément grâce au dessin du collecteur utilisé dans l'invention et représenté à la figure 3.a.

Le composant collecteur comprend différentes pistes 5, comme représenté à la figure 3.a. Le nombre de pistes, en l'occurrence 4 pistes associées respectivement aux doubles balais A, B, C, D, correspond au nombre de couples de pôles à exciter du stator comme représenté sur la figure 1. Les pistes 5 sont utilisées pour réaliser un contact électrique entre deux balais.

Le contrôle, c'est-à-dire le démarrage et l'arrêt du moteur, est réalisé par la commutation de l'alimentation appliquée au système.

Le collecteur d'autocommutation assure donc les mêmes séquences de commutation que ferait une électronique de pilotage.

Si nécessaire, le sens de rotation du moteur peut être inversé en commutant, de préférence grâce à un interrupteur, l'alimentation des bobines statoriques vers un autre système de balais, dont la configuration correspond à l'autre sens de rotation. Pour arrêter le moteur, il faut couper l'alimentation des bobines statoriques et l'arbre s'arrête et reste en position grâce au couple de détente du moteur ou grâce au frottement avec un réducteur de vitesse éventuellement présent sur l'arbre.

Il est également possible de réaliser des pas intermédiaires, soit par recouvrement partiel des pistes du collecteur, soit en tirant parti de l'épaisseur des balais.

Reprenons à nouveau le cas du moteur à réluctance variable quadriphasé de la figure 1. Les bobines (A,A'), (B,B'), (C,C') et (D,D') sont groupées par deux et forment les quatre phases du moteur. Dans ce type de moteur, le rotor possède moins de pôles que le stator. Cela garantit qu'un seul couple de dents du rotor s'alignera avec un seul couple de dents, c'est-à-dire une seule phase, du stator à un instant t.

En l'espèce, le stator possède 8 dents et le rotor 6. Le rotor effectuera donc une rotation de 15° (60° - 45°) à chaque impulsion du stator. Ce moteur possède donc 24 pas (360°/15°).

Dans ce cas-ci, la séquence de commutation des 4 phases du stator de la figure 1 est donnée par le tableau 1 ci-dessous, en supposant que la position de départ du moteur est 0°.

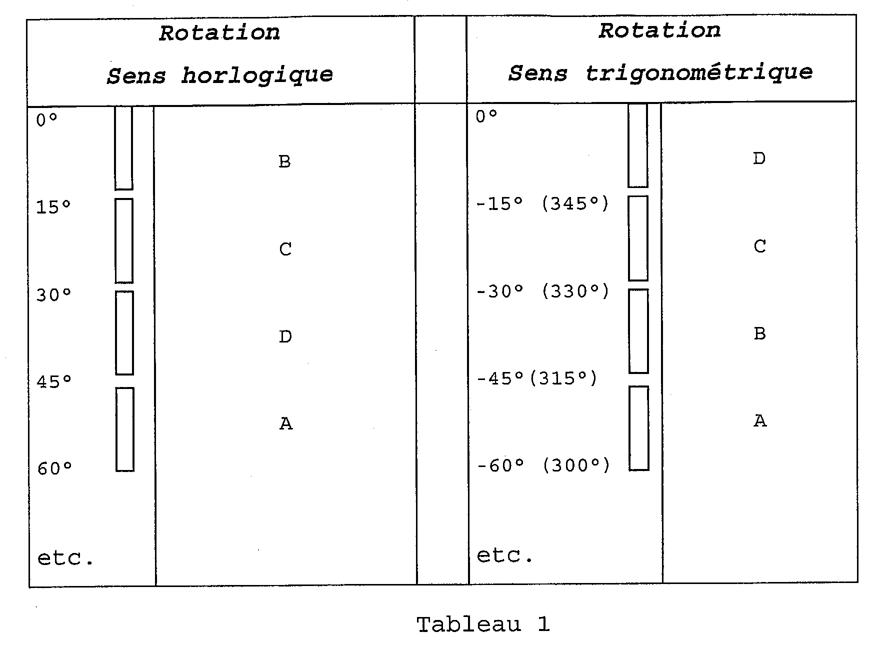

La figure 3.a représente un collecteur dessiné pour suivre une rotation dans le sens trigonométrique (anti-horlogique) avec, de l'extérieur vers l'intérieur du collecteur, les balais des bobines (A,A'), ensuite ceux des bobines (B,B'), puis ceux des bobines (C,C') et enfin ceux des bobines (D,D'), en reprenant les notations de la figure 1. Lorsque le moteur est en position 0°, l'alimentation passe des balais de la phase A vers les balais de la phase D, et entame sa rotation dans le sens trigonométrique, suivant ainsi la séquence "rotation sens trigonométrique" du tableau 1. Pour pouvoir tourner dans l'autre sens, on disposera un autre ensemble de balais, par exemple à 60° du premier ensemble de balais (référence 4' sur la figure 3.a), avec A sur la piste de D, B sur la piste de A, C sur la piste de B, D sur la piste de C, par rapport au premier ensemble de balais. Quelle que soit la position du moteur lors de la commutation de l'alimentation du premier jeu de balais 4 au second jeu de balais 4', le moteur va entamer sa rotation dans le sens horlogique, suivant ainsi la séquence "rotation sens horlogique" du tableau 1.

L'invention présente les avantages suivants :
- l'alimentation du moteur par un système balais-collecteur permet d'éviter d'adjoindre au moteur une alimentation électronique de régulation. Cette solution permet donc de supprimer l'alimentation électronique du moteur pas à pas ainsi que le capteur de position associé, ce qui a pour conséquence une réduction de la masse et du coût du moteur. Sa fiabilité se trouve également augmentée, vu l'utilisation de composants mécaniques plutôt qu'électroniques ;
- la possibilité de découplage physique, par exemple magnétique, du collecteur par rapport à l'arbre du moteur permet, si le moteur est amené à fonctionner dans un environnement sévère tel que celui des vannes pour fluides cryogéniques, d'éviter la mise en place de joints entre la partie collecteur et la partie moteur, ce qui aurait pour conséquence d'augmenter le couple moteur nécessaire et donc la taille et la masse dudit moteur.

## Revendications

1. Moteur pas à pas à courant continu comprenant un stator (1) multipolaire à n (n pair) bobinages (7) formant n/2 paires de pôles magnétiques et un rotor (2) à m dents ou pôles (m ≠ n) et des moyens d'alimentation desdits bobinages (7) du stator dans un ordre successif pour faire tourner le rotor dans un sens déterminé, **caractérisé en ce que** lesdits moyens comprennent un dispositif électromécanique de type balais-collecteur (4,15) où le collecteur (15) est solidaire du rotor et présente une configuration de pistes conductrices (5) coopérant avec les balais (4) pendant le fonctionnement de manière à assurer automatiquement, de par la simple rotation du moteur, l'alimentation desdits bobinages (7) du stator.

2. Moteur pas à pas selon la revendication 1, **caractérisé en ce que** le rotor (2) est isolé physiquement du stator par un chemisage (3,3'), de préférence en matériau métallique amagnétique.

3. Moteur pas à pas selon la revendication 1 ou 2, **caractérisé en ce que** le collecteur (15) est couplé magnétiquement au rotor (2), la rotation conjointe des deux éléments étant réalisée sans lien mécanique.

4. Moteur pas à pas selon l'une quelconque des revendications précédentes, **caractérisé en ce que** le collecteur (15) comporte n/2 pistes circulaires adjacentes pourvues de secteurs conducteurs intermittents (5) disposés sur chaque piste à intervalle régulier et **en ce que** les secteurs conducteurs de deux pistes adjacentes quelconques sont disposés de manière à permettre l'alimentation successive des bobinages et par suite le déplacement angulaire incrémental du rotor, appelé pas.

5. Moteur pas à pas selon la revendication 4, où les secteurs conducteurs (5) de deux pistes adjacentes quelconques se recouvrent partiellement dans le sens circonférentiel, ce qui correspond au fait que le bobinage d'indice i (i entier) est toujours alimenté lorsque la commutation de l'alimentation est réalisée sur le bobinage d'indice i+1, ce qui permet l'obtention de pas intermédiaires.

6. Moteur selon la revendication 4 ou 5, **caractérisé en ce que** lesdites pistes comprenant des secteurs conducteurs intermittents (5) sont disposées sur l'une des faces d'un disque (15) centré sur l'axe du rotor (2).

7. Moteur selon la revendication 4 ou 5, **caractérisé en ce que** lesdites pistes comprenant des secteurs conducteurs intermittents (5) sont disposées chacune sur la tranche d'un disque (15) centré sur le rotor (2), les différents disques étant empilés de manière contiguë.

8. Moteur selon la revendication 6 ou 7, **caractérisé en ce que** le disque (15) comporte sur une de ses faces ou sur sa tranche un circuit imprimé, présentant un ou plusieurs secteurs conducteurs intermittents (5).

9. Moteur selon l'une quelconque des revendications précédentes, **caractérisé en ce que** le moteur est un moteur à réluctance variable, le rotor étant un rotor à encoches en matériau non aimanté ferromagnétique, de préférence en fer doux ou un moteur à aimants permanents, le rotor comprenant une pluralité d'aimants permanents, ou encore un moteur hybride.

10. Moteur selon l'une quelconque des revendications précédentes, **caractérisé en ce que** le contact électrique intermittent (10) au niveau du collecteur permettant la commutation d'un bobinage (7) du stator (1) est assuré au moyen de deux balais fixes adjacents (4), dont l'un est connecté à la borne positive (+ V) de l'alimentation (6) et l'autre connecté à une extrémité du bobinage (7) à commuter, l'autre extrémité de ce bobinage (7) étant connectée à la borne 0 de l'alimentation (6).

11. Moteur selon l'une quelconque des revendications précédentes, **caractérisé en ce qu'**il comprend un second dispositif de balais sur lequel l'alimentation des bobines statoriques peut être commutée et dont la configuration a été adaptée au sens de rotation inverse du moteur.

12. Moteur selon la revendication 11, **caractérisé en ce qu'**il comprend un interrupteur pour la commutation du premier au second dispositif de balais.

13. Collecteur appartenant à un dispositif électromécanique balais-collecteur pour moteur pas à pas à courant continu selon l'une quelconque des revendications précédentes.

14. Vanne, de préférence pour le contrôle de l'écoulement de fluides agressifs tels que fluides portés à très haute ou très basse température, comprenant un dispositif d'actionnement à arbre commandé par un moteur pas à pas selon l'une quelconque des revendications 1 à 12, **caractérisée en ce qu'**uniquement l'arbre et le rotor du moteur baignent dans ledit fluide.

15. Utilisation d'une vanne, selon la revendication 14, pour le contrôle de l'écoulement de fluide cryogénique dans le secteur spatial.
